# EUROPÄISCHE PATENTSCHRIFT

(11) **EP 3 732 087 B1**
(45) Veröffentlichungstag und Bekanntmachung des Hinweises auf die Patenterteilung: **31.07.2024**
(21) Anmeldenummer: 18826958.3
(22) Anmeldetag: 28.11.2018
(51) Int. Cl.: B62D 5/04

(54) **LENKVORRICHTUNG**
STEERING DEVICE
DISPOSITIF DE DIRECTION

(30) Priorität: 27.12.2017 DE 102017223814
(43) Veröffentlichungstag der Anmeldung: 04.11.2020
(73) Patentinhaber: Robert Bosch GmbH, 70442 Stuttgart (DE)
(72) Erfinder: KUEHNHOEFER, Thomas, 73540 Heubach (DE); WEBER, Markus, 73035 Göppingen (DE); WEBER, Stefan Kersten, 71394 Kernen im Remstal (DE)
(86) Internationale Anmeldenummer: PCT/EP2018/082831
(87) Internationale Veröffentlichungsnummer: WO 2019/129455

(56) Entgegenhaltungen:
- DE-A1- 102008 048 952
- DE-A1- 102010 050 819
- DE-A1- 102010 050 820
- DE-A1- 102014 117 406
- DE-A1- 102015 115 423
- DE-B4- 112011 105 756
- US-A1- 2002 022 914
- US-A1- 2017 277 607

## Beschreibung

### Stand der Technik

Die Erfindung geht aus von einer Lenkvorrichtung nach dem Oberbegriff des Anspruch 1. Zudem betrifft die Erfindung ein Lenksystem gemäß Anspruch 11.

Aus dem Stand der Technik sind Lenksysteme mit einer elektrischen Lenkunterstützung in Form einer Servolenkung bekannt, wobei zur Erzeugung der Lenkunterstützung ein Elektromotor eingesetzt wird. Als Sicherheitskonzept, beispielsweise bei einem Fehler einer elektrischen und/oder elektronischen Komponente des Lenksystems, dient in der Regel eine mechanische Rückfallebene, welche dazu vorgesehen ist, ein Lenken auch mit ausgefallener Lenkunterstützung zu ermöglichen und ein beherrschbaren und sicheren Betrieb zu gewährleisten. Realisiert wird der Wechsel in einen rein mechanischen Betrieb durch Abschalten einer Haupt-Steuereinheit mit einer Highlevel-Software zur Steuerung eines Betriebs des Elektromotors und/oder durch Deaktivieren einer mit dem Elektromotor verbundenen Leistungselektronik. Ein plötzliches Abschalten der Lenkunterstützung führt jedoch zu einem hohen Momentensprung an einer Lenkhandhabe des Lenksystems, was für einen Fahrer sehr irritierend sein kann und eine Unfallgefahr erhöht.

Aus diesem Grund wird beispielsweise in der DE 10 2010 050 820 A1 vorgeschlagen, einen Betrieb des Elektromotors bei einem Fehler der Haupt-Steuereinheit mittels einer Hilfs-Steuereinheit in Form eines Überwachungsrechners zu steuern. Die Hilfs-Steuereinheit dient in diesem Fall einerseits zur Überwachung der Haupt-Steuereinheit in einem Normalbetriebszustand und andererseits zur Ansteuerung eines Elektromotors bzw. einer Leistungselektronik in einem Fehlerbetriebszustand.

Ferner offenbart die DE 10 2008 048 952 A1 ein Lenksystem mit einer Haupt-Steuereinheit zur Ansteuerung einer Leistungselektronik und mit einer zusätzlichen Hilfs-Steuereinheit, welche bei einem Normalbetrieb zur Überwachung und/oder zur Aufbereitung von Sensordaten für die Haupt-Steuereinheit dient und bei einem Fehler der Haupt-Steuereinheit die Leistungselektronik für einen Notlauf ansteuert, um ein hartes Abschalten und hierdurch eine Irritation des Fahrers zu verhindern. US 2017/277607 offenbart eine Lenkvorrichtung mit zumindest einer Haupt-Steuereinheit, welche in zumindest einem Normalbetriebszustand zur Steuerung eines Betriebs wenigstens eines Elektromotors vorgesehen ist, und mit zumindest einer unabhängig von der Haupt-Steuereinheit betreibbaren Hilfs-Steuereinheit, welche zur Steuerung des Betriebs des Elektromotors vorgesehen ist, wobei sich die Hilfs-Steuereinheit in dem Normalbetriebszustand in einem passiven Betriebsmodus in Form eines Ruhebetriebsmodus und/oder eines Bereitschaftsbetriebsmodus befindet, in welchem die Hilfs-Steuereinheit unbetrieben und/oder inaktiv ist.

Die Doppelfunktion der Hilfs-Steuereinheit führt jedoch in beiden Fällen zu einem stark erhöhten Rechenaufwand und schränkt gleichzeitig eine Flexibilität sowie eine Betriebssicherheit ein.

Die Aufgabe der Erfindung besteht somit insbesondere darin, eine besonders effiziente Lenkvorrichtung mit verbesserten Eigenschaften hinsichtlich einer Flexibilität bereitzustellen. Die Aufgabe wird durch die kennzeichnenden Merkmale des Anspruchs 1 sowie die Merkmale des Anspruchs 11 gelöst, während vorteilhafte Ausgestaltungen und Weiterbildungen der Erfindung den Unteransprüchen entnommen werden können.

### Offenbarung der Erfindung

Die Erfindung geht aus von einer Lenkvorrichtung, insbesondere zur Bereitstellung einer elektrischen Lenkunterstützung, mit zumindest einer Haupt-Steuereinheit, welche in zumindest einem Normalbetriebszustand zur Steuerung eines Betriebs wenigstens eines Elektromotors vorgesehen ist, und mit zumindest einer Hilfs-Steuereinheit, welche in zumindest einem, insbesondere von dem Normalbetriebszustand verschiedenen, Fehlerbetriebszustand, bei welchem eine Störung und/oder ein Ausfall der Haupt-Steuereinheit auftritt, insbesondere zumindest temporär, zur Steuerung des Betriebs des Elektromotors vorgesehen ist. Es wird vorgeschlagen, dass die Haupt-Steuereinheit, insbesondere in dem Normalbetriebszustand, unabhängig von der Hilfs-Steuereinheit betreibbar ist und sich die Hilfs-Steuereinheit in dem Normalbetriebszustand in einem passiven Betriebsmodus befindet. Durch diese Ausgestaltung kann insbesondere eine Flexibilität der Lenkvorrichtung erhöht werden. Darüber hinaus kann insbesondere ein Rechenaufwand minimiert und/oder ein Steueralgorithmus vereinfacht werden. Ferner kann vorteilhaft eine Betriebssicherheit erhöht werden, da eine Irritation eines Fahrers in dem Fehlerbetriebszustand verhindert werden kann. Zudem kann vorteilhaft eine Effizienz, insbesondere eine Leistungseffizienz, eine Steuerungseffizienz, eine Energieeffizienz, eine Bauraumeffizienz und/oder eine Kosteneffizienz, optimiert werden.

Unter einer "Lenkvorrichtung" soll in diesem Zusammenhang insbesondere zumindest ein Teil, insbesondere eine Unterbaugruppe, eines Lenksystems, insbesondere eines Fahrzeugs und vorzugsweise eines Kraftfahrzeugs, verstanden werden. Das Lenksystem ist dabei vorteilhaft als konventionelles Lenksystem, insbesondere mit einem mechanischen Durchgriff, ausgebildet und somit insbesondere von einem als Steer-by-Wire-Lenksystem ausgebildeten Lenksystem verschieden. Zudem kann die Lenkvorrichtung insbesondere auch den Elektromotor umfassen. Darüber hinaus kann die Lenkvorrichtung weitere Bauteile und/oder Baugruppen umfassen, wie beispielsweise wenigstens eine Lenkhandhabe, wenigstens eine, vorzugsweise als Wechselrichtereinheit und/oder Endstufe ausgebildete, Leistungselektronik zum Betrieb, insbesondere zur Ansteuerung und/oder Versorgung, des Elektromotors und/oder wenigstens eine Sensoreinheit zur Erfassung einer Rotorlage des Elektromotors und/oder zur Erfassung einer Lenkwinkelinformation von der Lenkhandhabe. Der Elektromotor ist ferner insbesondere als Servomotor, vorteilhaft als bürstenloser Motor und besonders vorteilhaft als Asynchronmotor oder als permanenterregter Synchronmotor ausgebildet. Bevorzugt ist der Elektromotor dabei Teil einer elektrischen Hilfskraftlenkung und insbesondere zur Erzeugung der elektrischen Lenkunterstützung vorgesehen. Der Elektromotor könnte dabei beispielsweise als sechsphasiger, neunphasiger oder als zwölfphasiger Elektromotor ausgebildet sein. Bevorzugt wird jedoch vorgeschlagen, dass der Elektromotor als dreiphasiger Elektromotor und/oder Standard-Elektromotor ausgebildet ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner soll unter einer "Steuereinheit" insbesondere eine elektronische Einheit verstanden werden, welche einen Informationseingang, eine Informationsverarbeitung und eine Informationsausgabe aufweist. Vorteilhaft weist die Steuereinheit, insbesondere die Haupt-Steuereinheit und/oder die Hilfs-Steuereinheit, ferner zumindest eine Recheneinheit und/oder einen Prozessor, beispielsweise in Form eines Mikroprozessors, zumindest einen Betriebsspeicher, zumindest ein Ein- und/oder Ausgabemittel, zumindest ein Betriebsprogramm, zumindest eine Steuerroutine, zumindest eine Regelroutine, zumindest eine Berechnungsroutine und/oder zumindest eine Verarbeitungsroutine auf. Die Haupt-Steuereinheit umfasst insbesondere eine Highlevel-Software zur Steuerung des Betriebs des Elektromotors. Vorteilhaft ist die Haupt-Steuereinheit dazu vorgesehen, in dem Normalbetriebszustand, insbesondere durch Ansteuerung der Leistungselektronik, ein Motormoment des Elektromotors und bevorzugt ein Unterstützungsmoment des Elektromotors einzustellen. Die Hilfs-Steuereinheit weist insbesondere eine Wirkverbindung mit der Haupt-Steuereinheit auf und ist insbesondere dazu vorgesehen, die Haupt-Steuereinheit in dem Fehlerbetriebszustand zu ersetzen und eine Steuerung des Betriebs des Elektromotors zu übernehmen. Vorteilhaft sind die Haupt-Steuereinheit in dem Normalbetriebszustand und die Hilfs-Steuereinheit in dem Fehlerbetriebszustand dazu vorgesehen, zur Steuerung des Betriebs des Elektromotors zumindest teilweise dieselben und/oder die identischen, insbesondere bestehenden, Baugruppen und Verbindungsleitungen zu verwenden und vorzugsweise dieselben Phasen des Elektromotors zu betreiben. Ferner ist die Hilfs-Steuereinheit vorzugsweise unabhängig von der Haupt-Steuereinheit betreibbar. Insbesondere ist die Hilfs-Steuereinheit zumindest und vorteilhaft ausschließlich dazu vorgesehen, in dem Fehlerbetriebszustand, insbesondere durch Ansteuerung der Leistungselektronik, ein Motormoment des Elektromotors und bevorzugt ein Unterstützungsmoment des Elektromotors zu verändern und/oder zu variieren. Bei Verwendung eines dreiphasigen Elektromotors kann durch die Steuerung des Elektromotors mittels der Haupt-Steuereinheit und der Hilfs-Steuereinheit dabei insbesondere eine Redundanz und vorteilhaft ein virtueller 6-Phasen-Betrieb bzw. 2x3-Phasen-Betrieb erreicht werden. Zudem ist die Hilfs-Steuereinheit bevorzugt zumindest zur Einleitung und/oder Bereitstellung eines Notlaufs und/oder Notbetriebs vorgesehen. Des Weiteren ist die Haupt-Steuereinheit und/oder die Hilfs-Steuereinheit vorteilhaft in ein Steuergerät der Lenkvorrichtung integriert.

Darüber hinaus soll unter "einer Störung und/oder einem Ausfall der Haupt-Steuereinheit" insbesondere eine Störung und/oder ein Ausfall der Haupt-Steuereinheit selbst und/oder einer mit der Haupt-Steuereinheit zusammenwirkenden Peripherie-Baugruppe, wie beispielsweise einer Energieversorgung, und eine hierdurch bewirkte Störung der Haupt-Steuereinheit verstanden werden. Ferner soll unter der Wendung, dass "die Haupt-Steuereinheit unabhängig von der Hilfs-Steuereinheit betreibbar ist" insbesondere verstanden werden, dass die Steuerung des Betriebs des Elektromotors in dem Normalbetriebszustand durch die Haupt-Steuereinheit und insbesondere unabhängig von der Hilfs-Steuereinheit erfolgt. In diesem Fall ist die Haupt-Steuereinheit insbesondere eigensicher ausgebildet und insbesondere nicht zur Überwachung der Hilfs-Steuereinheit vorgesehen. Analog soll unter der Wendung, dass ""die Hilfs-Steuereinheit unabhängig von der Haupt-Steuereinheit betreibbar ist" insbesondere verstanden werden, dass die Steuerung des Betriebs des Elektromotors in dem Fehlerbetriebszustand durch die Hilfs-Steuereinheit und insbesondere unabhängig von der Haupt-Steuereinheit erfolgt. In diesem Fall ist die Hilfs-Steuereinheit insbesondere eigensicher ausgebildet und insbesondere nicht zur Überwachung der Haupt-Steuereinheit vorgesehen. Unter einem "passiven Betriebsmodus" soll ferner insbesondere ein, insbesondere energiesparender, Ruhebetriebsmodus und/oder ein, insbesondere energiesparender, Bereitschaftsbetriebsmodus verstanden werden, in welchem die Hilfs-Steuereinheit insbesondere unbetrieben und/oder inaktiv ist und insbesondere keine aktive Funktion wahrnimmt.

Ferner wird vorgeschlagen, dass die Haupt-Steuereinheit dazu vorgesehen ist, in dem Normalbetriebszustand ein Betriebssignal, insbesondere einen Betriebsstatus, bereitzustellen und insbesondere an die Hilfs-Steuereinheit, insbesondere drahtlos, wie beispielsweise optisch und/oder induktiv, und/oder kabelgebunden, zu übermitteln. Die Hilfs-Steuereinheit ist insbesondere dazu vorgesehen, das Betriebssignal zu erfassen und/oder auszuwerten. Zudem ist die Hilfs-Steuereinheit insbesondere dazu vorgesehen, in Abhängigkeit von einem Ausbleiben des Betriebssignals die Störung und/oder den Ausfall der Haupt-Steuereinheit zu ermitteln und insbesondere einen mit dem Fehlerbetriebszustand verknüpften Fehlerbetriebsmodus zu initiieren, in welchem die Hilfs-Steuereinheit zur Steuerung des Betriebs des Elektromotors vorgesehen ist. Vorzugsweise ist die Haupt-Steuereinheit dazu elektrisch mit der Hilfs-Steuereinheit verbunden. Hierdurch kann vorteilhaft einfach ein Fehlerbetriebszustand erfasst werden, insbesondere auch in einem Betriebszustand, in welchem sich die Hilfs-Steuereinheit in einem passiven Betriebsmodus befindet. Zudem kann vorteilhaft auf eine rechenintensive Überwachung der Haupt-Steuereinheit mittels der Hilfs-Steuereinheit verzichtet werden.

Das Betriebssignal könnte beispielsweise ein kontinuierliches Signal sein. Eine besonders hohe Energieeffizienz kann jedoch insbesondere erreicht werden, wenn das Betriebssignal ein diskontinuierliches Signal ist und die Haupt-Steuereinheit dazu vorgesehen ist, das Betriebssignal in regelmäßigen zeitlichen Abständen bereitzustellen.

Bevorzugt ist die die Haupt-Steuereinheit dazu vorgesehen, das Betriebssignal in zeitlichen Abständen von zumindest 1 ms und vorteilhaft von zumindest 5 ms und/oder von höchstens 100 ms und vorteilhaft von höchstens 50 ms, bereitzustellen und an die Hilfs-Steuereinheit zu übermitteln. Hierdurch kann insbesondere eine Betriebssicherheit erhöht, eine sichere Erfassung des Fehlerbetriebszustand gewährleistet und gleichzeitig eine vorteilhafte Energieeffizienz erreicht werden.

Ist eine Rechenleistung der Hilfs-Steuereinheit geringer als eine Rechenleistung der Haupt-Steuereinheit, können insbesondere Zusatzkosten für die Hilfs-Steuereinheit reduziert werden. Bevorzugt ist die Rechenleistung der Hilfs-Steuereinheit dabei um zumindest 10 %, vorteilhaft um zumindest 25 %, vorzugsweise um zumindest 50 % und besonders bevorzugt um zumindest 75 % geringer als die Rechenleistung der Haupt-Steuereinheit.

Die Hilfs-Steuereinheit kann insbesondere dazu vorgesehen sein, den Elektromotor in dem Fehlerbetriebszustand derart zu betreiben, insbesondere zu blockieren und/oder zu bremsen, dass eine stufenförmige Verringerung eines Motormoments, insbesondere eines Unterstützungsmoments, des Elektromotors erreicht und insbesondere die Lenkunterstützung stufenförmig reduziert wird. Gemäß einer bevorzugten Ausgestaltung der Erfindung wird jedoch vorgeschlagen, dass die Hilfs-Steuereinheit dazu vorgesehen ist, den Elektromotor in dem Fehlerbetriebszustand derart zu betreiben, insbesondere zu blockieren und/oder zu bremsen, dass zumindest ein Ausrampen eines Motormoments, insbesondere eines Unterstützungsmoments, des Elektromotors erreicht wird. Vorzugsweise ist die Hilfs-Steuereinheit dabei dazu vorgesehen, den Elektromotor in dem Fehlerbetriebszustand derart zu betreiben, dass das Motormoment, insbesondere das Unterstützungsmoment, des Elektromotors kontinuierlich und insbesondere nicht schlagartig reduziert wird. Bevorzugt wird somit die bereitgestellte Lenkunterstützung kontinuierlich reduziert, wodurch insbesondere ein vorteilhaft sanfter und/oder unauffälliger Wechsel in einen rein mechanischen Betrieb erreicht und eine Irritation des Fahrers verhindert werden kann.

In einer weiteren Ausgestaltung der Erfindung wird vorgeschlagen, dass die Hilfs-Steuereinheit dazu vorgesehen ist, den Elektromotor in dem Fehlerbetriebszustand derart zu betreiben, dass ein zu dem Normalbetriebszustand äquivalentes Motormoment, insbesondere Unterstützungsmoment, des Elektromotors erzeugbar ist. Vorzugsweise ist die Hilfs-Steuereinheit dabei dazu vorgesehen, den Elektromotor in dem Fehlerbetriebszustand auf eine zu der Haupt-Steuereinheit äquivalente Weise zu betreiben, vorteilhaft derart, dass ein volles Motormoment, insbesondere Unterstützungsmoment, bereitgestellt werden kann. Vorteilhaft ist die Hilfs-Steuereinheit ferner dazu vorgesehen, in dem Fehlerbetriebszustand, insbesondere durch Ansteuerung der Leistungselektronik, das Motormoment des Elektromotors und bevorzugt das Unterstützungsmoment des Elektromotors einzustellen. Dazu kann die Hilfs-Steuereinheit insbesondere eine Highlevel-Software zur Steuerung des Betriebs des Elektromotors umfassen. Hierdurch kann vorteilhaft eine Irritation des Fahrers weiter reduziert werden, da auch in einem Fehlerbetriebszustand eine Lenkunterstützung bereitgestellt werden kann, welche dem Fahrer ein komfortables Lenken ermöglicht. Zudem kann vorteilhaft eine Betriebssicherheit erhöht werden, da sowohl ein der Haupt-Steuereinheit zugeordneter Steuerpfad als auch ein der Hilfs-Steuereinheit zugeordneter weiterer Steuerpfad unabhängig voneinander und gleichzeitig ausreichend sicher für den Betrieb des Elektromotors sind.

Ferner wird vorgeschlagen, dass die Lenkvorrichtung wenigstens eine Leistungselektronik, insbesondere die bereits zuvor genannte Leistungselektronik, zum Betrieb des Elektromotors umfasst, wobei die Hilfs-Steuereinheit dazu vorgesehen ist, in dem Fehlerbetriebszustand die Leistungselektronik, insbesondere mittelbar, wie beispielsweise über eine separate Treiberelektronik, oder vorteilhaft unmittelbar, anzusteuern. Hierdurch kann insbesondere eine vorteilhaft hohe Betriebssicherheit erreicht und/oder ein vorteilhaft einfacher Steueralgorithmus bereitgestellt werden.

Alternativ oder zusätzlich wird vorgeschlagen, dass die Lenkvorrichtung wenigstens eine Schalteinheit zur Auftrennung wenigstens einer Phase des Elektromotors und vorteilhaft zur selektiven Auftrennung der einzelnen Phasen des Elektromotors umfasst, wobei die Hilfs-Steuereinheit dazu vorgesehen ist, in dem Fehlerbetriebszustand die Schalteinheit, insbesondere mittelbar oder vorteilhaft unmittelbar, anzusteuern. Vorteilhaft umfasst die Schalteinheit dabei mehrere Schaltelemente, wobei bevorzugt eine Anzahl an Schaltelementen an eine Anzahl an Phasen angepasst ist, insbesondere derart, dass jeder Phase des Elektromotors genau eines der Schaltelemente zugeordnet ist. Ferner ist die Schalteinheit vorteilhaft schaltungstechnisch zwischen der Leistungselektronik und dem Elektromotor angeordnet. Hierdurch kann vorteilhaft eine Rechenleistung der Hilfs-Steuereinheit weiter reduziert werden, wodurch vorteilhaft eine Hilfs-Steuereinheit mit einem minimalen Chipsatz für minimale Mehrkosten bereitgestellt werden kann.

Darüber hinaus wird vorgeschlagen, dass die Lenkvorrichtung wenigstens eine Kontrolleinheit, beispielsweise eine weitere Schalteinheit, ein Pegelumsetzer, ein Leitungsdämpfer, ein Leitungsverstärker und/oder eine separate Treiberelektronik für die Leistungselektronik, umfasst, welche zumindest dazu vorgesehen ist, in dem Fehlerbetriebszustand in Abhängigkeit von einem Ansteuersignal der Hilfs-Steuereinheit einen Betrieb des Elektromotors durch die Haupt-Steuereinheit zu verhindern. Hierdurch kann insbesondere eine Betriebssicherheit erhöht werden, da die Haupt-Steuereinheit bei einem Fehler vorteilhaft von den restlichen Baugruppen abgetrennt werden kann.

Die Lenkvorrichtung soll hierbei nicht auf die oben beschriebene Anwendung und Ausführungsform beschränkt sein. Insbesondere kann die Lenkvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein beispielhaftes Lenksystem mit einer Lenkvorrichtung in einer vereinfachten Darstellung,
- Fig. 2: eine schematische Darstellung einer Ansteuerung eines Elektromotors der Lenkvorrichtung,
- Fig. 3a-b: ein beispielhaftes Schaubild eines Ausrampens eines Motormoments des Elektromotors in einem Fehlerbetriebszustand und
- Fig. 4 - 7: weitere Ausführungsbeispiele von Lenkvorrichtungen zur Bereitstellung einer elektrischen Lenkunterstützung.

### Beschreibung der Ausführungsbeispiele

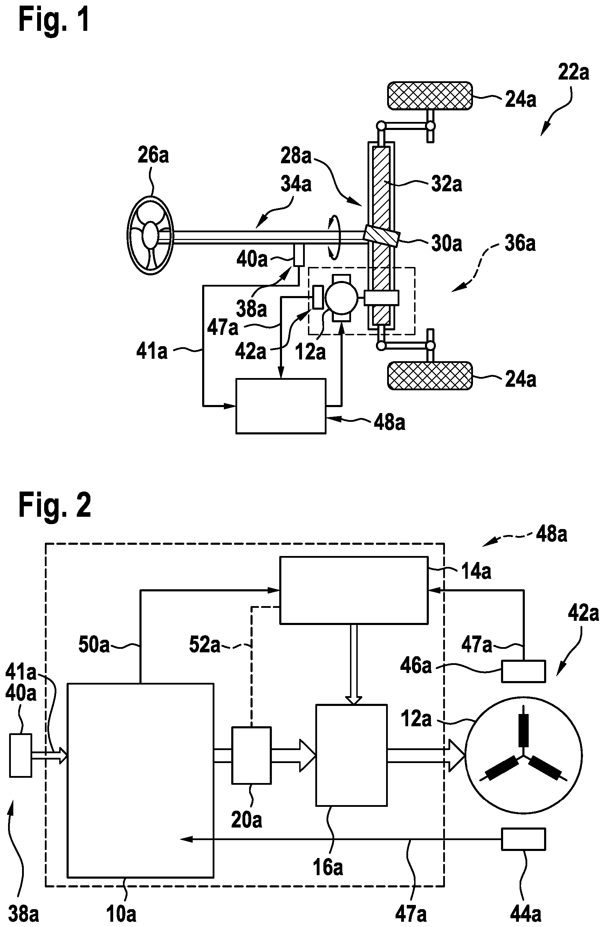

Figur 1 zeigt ein beispielhaftes Lenksystem 22a in einer vereinfachten Darstellung. Das Lenksystem 22a ist als konventionelles Lenksystem mit einem mechanischen Durchgriff ausgebildet. Das Lenksystem 22a ist zudem als elektrisch unterstütztes Lenksystem ausgebildet und weist demnach eine elektrische Hilfskraftunterstützung auf. Ferner ist das Lenksystem 22a zu einem Einsatz in einem Fahrzeug (nicht dargestellt), insbesondere einem Kraftfahrzeug, vorgesehen.

Das Lenksystem 22a weist in einem eingebauten Zustand eine Wirkverbindung mit Fahrzeugrädern 24a des Fahrzeugs auf und ist zur Beeinflussung einer Fahrtrichtung des Fahrzeugs vorgesehen.

Das Lenksystem 22a umfasst eine Lenkvorrichtung. Die Lenkvorrichtung umfasst eine, im vorliegenden Fall beispielhaft als Lenkrad ausgebildete, Lenkhandhabe 26a, welche zum Aufbringen eines manuellen Lenkmoments vorgesehen ist. Die Lenkhandhabe 26a dient folglich zum Einbringen einer Lenkvorgabe und insbesondere zur manuellen Steuerung der Fahrtrichtung des Fahrzeugs, insbesondere durch einen Fahrer.

Darüber hinaus weist die Lenkvorrichtung ein Lenkgetriebe 28a auf, welches im vorliegenden Fall als an sich bekanntes Zahnstangenlenkgetriebe ausgebildet ist. Das Lenkgetriebe 28a umfasst ein Lenkritzel 30a und eine mit dem Lenkritzel 30a mechanisch gekoppelte Zahnstange 32a. Das Lenkgetriebe 28a ist dazu vorgesehen, eine Schwenkbewegung und/oder Drehbewegung der Fahrzeugräder 24a zu bewirken und insbesondere eine Lenkvorgabe in eine Lenkbewegung der Fahrzeugräder 24a umzusetzen.

Zur mechanischen Verbindung der Lenkhandhabe 26a mit dem Lenkgetriebe 28a umfasst die Lenkvorrichtung ferner eine Lenksäule 34a. Die Lenksäule 34a umfasst zumindest ein Torsionselement (nicht dargestellt), im vorliegenden Fall insbesondere einen Drehstab, welches zu einer Verdrehung in Abhängigkeit von der Lenkvorgabe vorgesehen ist.

Des Weiteren umfasst die Lenkvorrichtung eine elektrisch ausgebildete Unterstützungseinheit 36a zur Erzeugung und/oder Bereitstellung einer Lenkunterstützung. Die Unterstützungseinheit 36a ist dazu vorgesehen, ein Unterstützungsmoment in das Lenkgetriebe 28a einzubringen und das, insbesondere von dem Fahrer aufgebrachte, manuelle Lenkmoment zu unterstützen.

Dazu umfasst die Unterstützungseinheit 36a einen, im vorliegenden Fall insbesondere als permanenterregten Synchronmotor ausgebildeten, Elektromotor 12a. Der Elektromotor 12a ist als mehrphasiger, im vorliegenden Fall dreiphasiger, Elektromotor ausgebildet. Der Elektromotor 12a steht in Wirkverbindung mit dem Lenkgetriebe 28a, insbesondere der Zahnstange 32a. Der Elektromotor 12a ist zur Erzeugung eines Motormoments, insbesondere eines Unterstützungsmoments, vorgesehen. Der Elektromotor 12a ist dabei Teil der elektrischen Hilfskraftlenkung und dient insbesondere zur Erzeugung der elektrischen Lenkunterstützung. Prinzipiell könnte ein Elektromotor jedoch auch als sechsphasiger oder als zwölfphasiger Elektromotor ausgebildet sein.

Ferner weist die Lenkvorrichtung eine erste Sensoreinheit 38a auf. Die erste Sensoreinheit 38a umfasst zumindest einen, beispielsweise als Drehmomentsensor ausgebildeten, Winkelsensor 40a und ist zur Erfassung einer Lenkwinkelinformation 41a von der Lenkhandhabe 26a vorgesehen. Im vorliegenden Fall ist die erste Sensoreinheit 38 in einem Bereich des Torsionselements angeordnet und zu einer Erfassung einer, insbesondere mit dem Torsionselement korrelierten, Lenkwinkelinformation 41a in Form eines Drehmomentsignals vorgesehen. Das Drehmomentsignal ist dabei ein Maß für das, insbesondere von dem Fahrer aufgebrachte, manuelle Lenkmoment. Vorteilhaft kann die erste Sensoreinheit 38a jedoch auch zumindest zwei Winkelsensoren aufweisen, wodurch insbesondere eine vorteilhafte Redundanz erreicht werden kann.

Des Weiteren weist die Lenkvorrichtung eine zweite Sensoreinheit 42a auf. Die zweite Sensoreinheit 42a umfasst zumindest einen Rotorlagesensor 44a, 46a und im vorliegenden Fall vorteilhaft zwei Rotorlagesensoren 44a, 46a (vgl. insbesondere Figur 2). Die zweite Sensoreinheit 42a ist in einem Bereich des Elektromotors 12a angeordnet und zu einer Erfassung eines Rotorlagesignals 47a des Elektromotors 12a vorgesehen. Prinzipiell könnte eine zweite Sensoreinheit jedoch auch genau einen Rotorlagesensor oder zumindest drei Rotorlagesensoren aufweisen.

Darüber hinaus weist die Lenkvorrichtung ein Steuergerät 48a auf. Das Steuergerät 48a weist eine Wirkverbindung mit der ersten Sensoreinheit 38a, der zweiten Sensoreinheit 42a und der Unterstützungseinheit 36a auf. Das Steuergerät 48a ist zu einer Ansteuerung des Elektromotors 12a und somit insbesondere zu einer Einstellung des Motormoments, insbesondere in Abhängigkeit von der Lenkwinkelinformation 41a und des Rotorlagesignals 47a, vorgesehen.

Figur 2 zeigt einen vereinfachten, schematischen Aufbau des Steuergeräts 48a und insbesondere ein vereinfachtes Prinzip-Blockschaltbild zur Ansteuerung des Elektromotors 12a.

Die Lenkvorrichtung umfasst eine Haupt-Steuereinheit 10a. Die Haupt-Steuereinheit 10a ist im vorliegenden Fall in das Steuergerät 48a integriert. Prinzipiell könnte eine Haupt-Steuereinheit jedoch auch separat von einem Steuergerät ausgebildet sein. Die Haupt-Steuereinheit 10a umfasst zumindest einen Prozessor (nicht dargestellt), beispielsweise in Form eines Mikroprozessors. Zudem kann die Haupt-Steuereinheit 10a zumindest einen Betriebsspeicher (nicht dargestellt) umfassen. Ferner umfasst die Haupt-Steuereinheit 10a zumindest ein im Betriebsspeicher hinterlegtes Betriebsprogramm mit zumindest einer Berechnungsroutine, zumindest einer Steuerroutine und zumindest einer Verarbeitungsroutine. Die Haupt-Steuereinheit 10a weist ferner eine elektrische Verbindung mit der ersten Sensoreinheit 38a und der zweiten Sensoreinheit 42a, insbesondere einem ersten Rotorlagesensor 44a der Rotorlagesensoren 44a, 46a, auf.

Darüber hinaus umfasst die Lenkvorrichtung eine an sich bekannte Leistungselektronik 16a, welche als Endstufe ausgebildet ist. Die Leistungselektronik 16a ist im vorliegenden Fall in das Steuergerät 48a integriert. Prinzipiell könnte eine Leistungselektronik jedoch auch separat von einem Steuergerät ausgebildet sein. Die Leistungselektronik 16a weist eine elektrische Verbindung mit der Haupt-Steuereinheit 10a und dem Elektromotor 12a auf. Die Leistungselektronik 16a ist zwischen der Haupt-Steuereinheit 10a und dem Elektromotor 12a angeordnet. Die Leistungselektronik 16a ist dazu vorgesehen, eine pulsierende gleichgerichtete Spannung einer Energiequelle in einen Phasenstrom umzuwandeln und über einen jeweiligen Mittelabgriff dem Elektromotor 12a, insbesondere einer jeweili-gen Phase des Elektromotors 12a, zuzuführen. Prinzipiell ist jedoch auch denkbar, auf eine Leistungselektronik zu verzichten oder eine Leistungselektronik in eine Haupt-Steuereinheit und/oder eine Hilfs-Steuereinheit zu integrieren.

In einem Normalbetriebszustand ist die Haupt-Steuereinheit 10a zur Steuerung eines Betriebs des Elektromotors 12a vorgesehen. Dabei ist die Haupt-Steuereinheit 10a dazu vorgesehen, die Lenkwinkelinformation 41a und das Rotorlagesignal 47a zu empfangen und durch Ansteuerung der Leistungselektronik 16a das Motormoment des Elektromotors 12a einzustellen.

Da es sich bei einem Lenksystem um eine sicherheitsrelevante Fahrzeugkomponente mit direktem Einfluss auf den Fahrer und/oder eine Fahrzeugführung handelt, wird in einem Fehlerbetriebszustand, in welchem eine Störung und/oder ein Ausfall der Haupt-Steuereinheit 10a selbst und/oder einer mit der Haupt-Steuereinheit 10a zusammenwirkenden Peripherie-Baugruppe, wie beispielsweise einer Energieversorgung, und eine hierdurch bewirkte Störung der Haupt-Steuereinheit 10a auftritt, ein entsprechendes Sicherheitskonzept benötigt. Als Sicherheitskonzept kann beispielsweise eine mechanische Rückfallebene dienen, welche zumindest die Lenkhandhabe 26a, die Lenksäule 34a und das Lenkgetriebe 28a umfasst und ein Lenken auch mit ausgefallener Lenkunterstützung ermöglicht. Ein plötzliches Abschalten der Lenkunterstützung bei einem Wechsel in den mechanischen Betrieb führt jedoch zu einem hohen Momentensprung an der Lenkhandhabe 26a, was für den Fahrer sehr irritierend sein kann und eine Unfallgefahr erhöht.

Insbesondere um in einem derartigen Fall eine Irritation des Fahrers zu verhindern, umfasst die Lenkvorrichtung eine Hilfs-Steuereinheit 14a. Die Hilfs-Steuereinheit 14a ist im vorliegenden Fall in das Steuergerät 48a integriert. Die Hilfs-Steuereinheit 14a umfasst zumindest einen Prozessor (nicht dargestellt), beispielsweise in Form eines Mikroprozessors. Ferner umfasst die Hilfs-Steuereinheit 14a zumindest einen weiteren Betriebsspeicher (nicht dargestellt) mit einem im weiteren Betriebsspeicher hinterlegten weiteren Betriebsprogramm.

Die Hilfs-Steuereinheit 14a ist getrennt von der Haupt-Steuereinheit 10a ausgebildet. Ferner ist die Hilfs-Steuereinheit 14a baulich verschieden von der Haupt-Steuereinheit 10a. Eine Rechenleistung der Hilfs-Steuereinheit 14a ist dabei um zumindest 50 % geringer als eine Rechenleistung der Haupt-Steuereinheit 10a. Prinzipiell könnte eine Hilfs-Steuereinheit jedoch auch separat von einem Steuergerät ausgebildet sein. Ferner könnte eine Rechenleistung einer Hilfs-Steuereinheit auch identisch oder nahezu identisch zu einer Rechenleistung einer Haupt-Steuereinheit sein.

Die Hilfs-Steuereinheit 14a weist ferner eine elektrische Verbindung mit der Haupt-Steuereinheit 10a und mit der Leistungselektronik 16a auf. Zudem weist die Hilfs-Steuereinheit 14a eine elektrische Verbindung mit der zweiten Sensoreinheit 42a, insbesondere einem zweiten Rotorlagesensor 44a der Rotorlagesensoren 44a, 46a, auf. Die Hilfs-Steuereinheit 14a ist im vorliegenden Fall jedoch frei von einer elektrischen Verbindung mit der ersten Sensoreinheit 38a. Grundsätzlich könnte eine Hilfs-Steuereinheit jedoch auch eine elektrische Verbindung mit einer ersten Sensoreinheit aufweisen, wie beispielsweise in einigen der folgenden Ausführungsbeispielen dargestellt.

Darüber hinaus sind die Hilfs-Steuereinheit 14a und die Haupt-Steuereinheit 10a unabhängig voneinander betreibbar. Die Hilfs-Steuereinheit 14a befindet sich in dem Normalbetriebszustand in einem rein passiven Betriebsmodus und ist ausschließlich in dem Fehlerbetriebszustand zur Steuerung des Betriebs des Elektromotors 12a vorgesehen. Im vorliegenden Fall ist die Hilfs-Steuereinheit 14a dazu vorgesehen, die Haupt-Steuereinheit 10a in dem Fehlerbetriebszustand zu ersetzen und eine Steuerung des Betriebs des Elektromotors 12a zu übernehmen, um einen Notlauf und/oder einen Notbetrieb einzuleiten. Die Hilfs-Steuereinheit 14a ist zudem dazu vorgesehen, zur Steuerung des Betriebs des Elektromotors 12a zumindest teilweise dieselben und/oder die identischen, insbesondere bestehenden, Baugruppen und Verbindungsleitungen zu verwenden und dieselben Phasen des Elektromotors 12a wie die Haupt-Steuereinheit 10a zu betreiben. Bei der Verwendung eines dreiphasigen Elektromotors 12a kann hierdurch eine Redundanz erreicht und vorteilhaft ein virtueller 6-Phasen-Betrieb bzw. 2x3-Phasen-Betrieb erreicht werden. Im vorliegenden Fall ist die Hilfs-Steuereinheit 14a dazu vorgesehen, in dem Fehlerbetriebszustand die Leistungselektronik 16a unmittelbar anzusteuern und hierdurch den Elektromotor 12a derart zu betreiben, dass ein Ausrampen des Motormoments, insbesondere des Unterstützungsmoments, des Elektromotors 12a erreicht wird und Lenkbewegungen an der Lenkhandhabe 26a vorteilhaft gedämpft werden. Insbesondere wird dabei durch die Hilfs-Steuereinheit 14a das Motormoment des Elektromotors 12a und somit die bereitgestellte Lenkunterstützung kontinuierlich und insbesondere nicht schlagartig reduziert, wodurch insbesondere ein vorteilhaft sanfter und/oder unauffälliger Wechsel in den mechanischen Betrieb erreicht und eine Irritation des Fahrers verhindert werden kann.

Zur Ermittlung des Fehlerbetriebszustands, insbesondere der Störung und/oder des Ausfalls der Haupt-Steuereinheit 10a, ist die Haupt-Steuereinheit 10a dazu vorgesehen, in dem Normalbetriebszustand ein Betriebssignal 50a bereitzustellen und insbesondere an die Hilfs-Steuereinheit 14a zu übermitteln. Das Betriebssignal 50a ist im vorliegenden Fall ein diskontinuierliches Signal und wird in regelmäßigen zeitlichen Abständen zwischen 1 ms und 100 ms von der Haupt-Steuereinheit 10a an die Hilfs-Steuereinheit 14a übermittelt. Die, in dem Normalbetriebszustand insbesondere passive, Hilfs-Steuereinheit 14a ist dazu vorgesehen, das Betriebssignal 50a zu erfassen. Im Falle einer Störung und/oder eines Ausfalls der Haupt-Steuereinheit 10a wird das Betriebssignal 50a nicht mehr von der Haupt-Steuereinheit 10a erzeugt, sodass die Hilfs-Steuereinheit 14a anhand eines Ausbleibens des Betriebssignals 50a die Störung und/oder den Ausfall der Haupt-Steuereinheit 10a ermitteln und insbesondere einen mit dem Fehlerbetriebszustand verknüpften Fehlerbetriebsmodus initiieren kann, in welchem die Hilfs-Steuereinheit 14a die Steuerung des Betriebs des Elektromotors 12a übernimmt. Grundsätzlich könnte ein Betriebssignal jedoch auch einem kontinuierlichen Signal entsprechen.

Darüber hinaus umfasst die Lenkvorrichtung im vorliegenden Fall eine Kontrolleinheit 20a. Die Kontrolleinheit 20a ist im vorliegenden Fall in das Steuergerät 48a integriert. Prinzipiell könnte eine Kontrolleinheit jedoch auch separat von einem Steuergerät ausgebildet sein. Die Kontrolleinheit 20a weist eine elektrische Verbindung mit der Hilfs-Steuereinheit 14a auf. Zudem weist die Kontrolleinheit 20a eine elektrische Verbindung mit der Haupt-Steuereinheit 10a und der Leistungselektronik 16a auf. Im vorliegenden Fall ist die Kontrolleinheit 20a zwischen der Haupt-Steuereinheit 10a und der Leistungselektronik 16a angeordnet. Die Kontrolleinheit 20a kann beispielsweise als Schalteinheit, als Pegelumsetzer, als Leitungsdämpfer, als Leitungsverstärker und/oder als separate Treiberelektronik für die Leistungselektronik 16a, ausgebildet sein. Die Kontrolleinheit 20a ist zumindest dazu vorgesehen, in dem Fehlerbetriebszustand in Abhängigkeit von einem Ansteuersignal 52a der Hilfs-Steuereinheit 14a einen Betrieb des Elektromotors 12a durch die Haupt-Steuereinheit 10a zu verhindern. Im vorliegenden Fall ist die Kontrolleinheit 20a dabei zumindest dazu vorgesehen, die Haupt-Steuereinheit 10a von der Leistungselektronik 16a abzukoppeln, wodurch insbesondere eine Betriebssicherheit erhöht werden kann, da die Haupt-Steuereinheit 10a bei einem Fehler von den restlichen Baugruppen abgetrennt werden kann. Prinzipiell ist jedoch auch denkbar, auf eine Kontrolleinheit vollständig zu verzichten. Ferner könnte eine Kontrolleinheit beispielsweise in Form einer Treiberelektronik für eine Leistungselektronik auch in die Leistungselektronik, eine Haupt-Steuereinheit und/oder eine Hilfs-Steuereinheit integriert sein.

Darüber hinaus kann die Lenkvorrichtung und/oder das Steuergerät 48a weitere Bauteile und/oder Baugruppen umfassen, wie beispielsweise eine Energieversorgungsschaltung und/oder eine Schalteinheit zur Auftrennung wenigstens einer Phase des Elektromotors 12a.

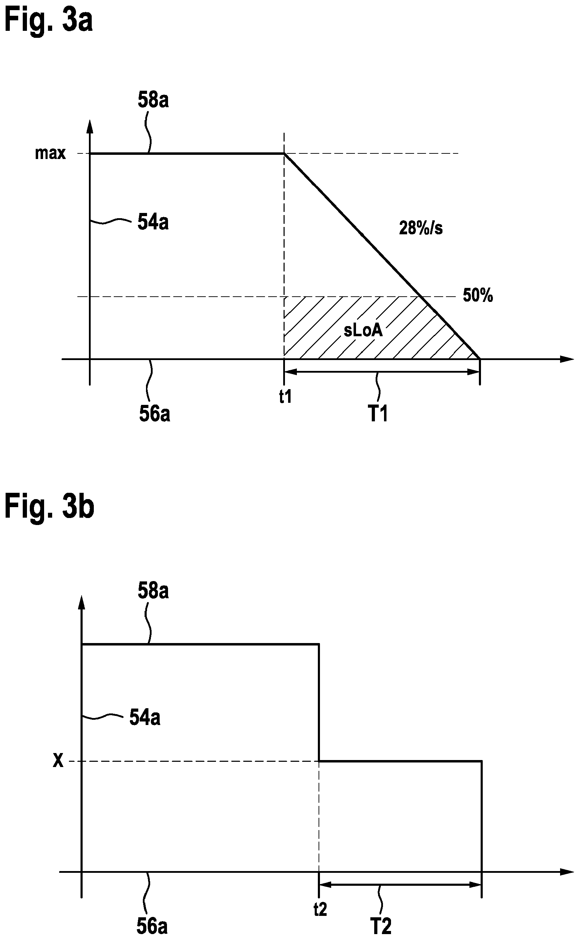

Die Figuren 3a und 3b zeigen jeweils einen beispielhaften Verlauf des Motormoments des Elektromotors 12a. Eine Ordinatenachse 54a ist jeweils als Größenachse ausgebildet und zeigt einen Grad der Lenkunterstützung in %. Eine Abszissenachse 56a ist jeweils als Zeitachse ausgebildet. Ein Kurve 58a zeigt jeweils das Motormoment des Elektromotors 12a.

In Figur 3a tritt zu einem Zeitpunkt t1 eine Störung und/oder ein Ausfall der Haupt-Steuereinheit 10a auf. Anschließend ist die Hilfs-Steuereinheit 14a dazu vorgesehen, den Elektromotor 12a derart zu betreiben, dass ein Ausrampen des Motormoments des Elektromotors 12a erreicht wird, sodass die Lenkunterstützung kontinuierlich reduziert wird. Eine Zeitdauer T1, welche das Ausrampen des Motormoments des Elektromotors 12a charakterisiert beträgt dabei zwischen 0,5 s und 5 s. Ein hervorgehobener Bereich charakterisiert einen Bereich eines plötzlichen Verlusts der Lenkunterstützung (sudden loss of assistance =sLoA).

Figur 3b zeigt eine Alternative zur Figur 3a. In diesem Fall tritt zu einem Zeitpunkt t2 eine Störung und/oder ein Ausfall der Haupt-Steuereinheit 10a auf. Anschließend ist die Hilfs-Steuereinheit 14a dazu vorgesehen, den Elektromotor 12a derart zu betreiben, dass eine stufenförmige Verringerung des Motormoments des Elektromotors 12a erreicht wird, sodass die Lenkunterstützung stufenförmig reduziert wird. Im vorliegenden Fall ist die Hilfs-Steuereinheit 14a dazu vorgesehen, ab dem Zeitpunkt t2 das Motormoment des Elektromotors 12a und somit die Lenkunterstützung über eine weitere Zeitdauer T2 auf einen Wert x zu verringern.

Die weitere Zeitdauer T2, welche insbesondere eine Verringerung des Motormoments des Elektromotors 12a auf ein verschwindendes Motormoment charakterisiert, beträgt dabei zwischen 3 s und 5 s. Der Wert x liegt zwischen 15 % und 30 % eines maximalen Motormoments. Auch wenn in Figur 3b beispielhaft lediglich eine Stufe dargestellt ist, kann eine Hilfs-Steuereinheit auch dazu vorgesehen sein, einen Elektromotor mit mehreren Stufen anzusteuern, um eine stufenförmige Verringerung eines Motormoments eines Elektromotors zu erreichen.

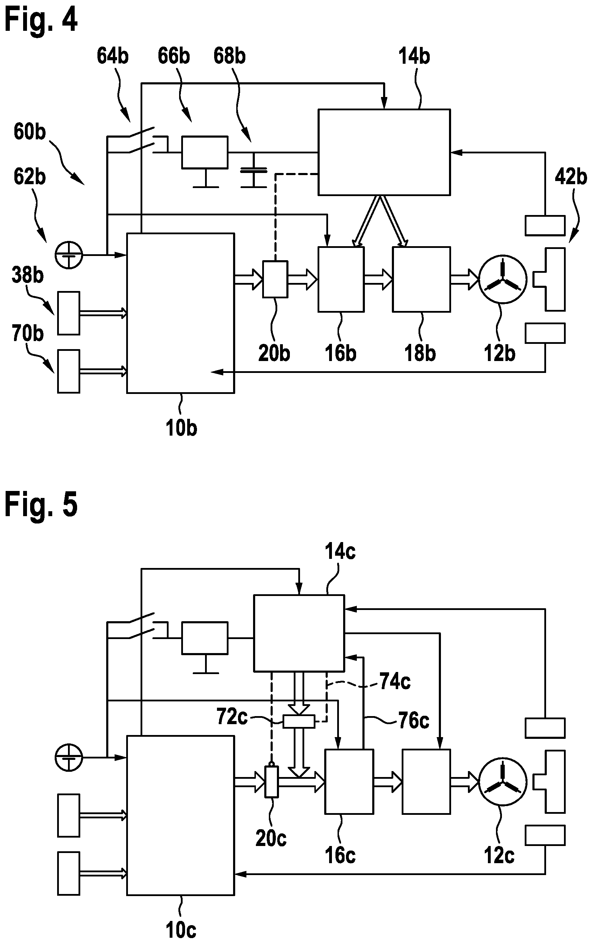

In den Figuren 4 bis 7 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3b, verwiesen werden kann. Zur Unterscheidung der Ausführungsbeispiele ist der Buchstabe a den Bezugszeichen des Ausführungsbeispiels in den Figuren 1 bis 3b nachgestellt. In den Ausführungsbeispielen der Figuren 4 bis 7 ist der Buchstabe a durch die Buchstaben b bis e ersetzt.

Figur 4 zeigt ein weiteres Ausführungsbeispiel der Erfindung mit einer weiteren Lenkvorrichtung in einer detaillierteren Darstellung. Dem Ausführungsbeispiel der Figur 4 ist der Buchstabe b nachgestellt.

Die Lenkvorrichtung umfasst dabei analog zum vorherigen Ausführungsbeispiel eine Haupt-Steuereinheit 10b, eine Hilfs-Steuereinheit 14b, einen Elektromotor 12b, eine Leistungselektronik 16b, eine erste Sensoreinheit 38b, eine zweite Sensoreinheit 42b sowie eine Kontrolleinheit 20b, im vorliegenden Fall insbesondere in Form einer separaten Treiberelektronik für die Leistungselektronik 16b.

Ferner weist die Haupt-Steuereinheit 10b eine zusätzliche Anbindung an ein Fahrzeugbus-System 70b auf.

Darüber hinaus umfasst die Lenkvorrichtung in diesem Fall eine Schalteinheit 18b. Die Schalteinheit 18b weist eine elektrische Verbindung mit der Hilfs-Steuereinheit 14b auf. Zudem weist die Schalteinheit 18b eine elektrische Verbindung mit der Leistungselektronik 16b und dem Elektromotor 12b auf. Im vorliegenden Fall ist die Schalteinheit 18b zwischen der Leistungselektronik 16b und dem Elektromotor 12b angeordnet. Die Schalteinheit 18b ist dazu vorgesehen, die einzelnen Phasen des Elektromotors 12b selektiv aufzutrennen. Dazu umfasst die Schalteinheit 18b mehrere Schaltelemente (nicht dargestellt), wobei im vorliegenden Fall jeder Phase des Elektromotors 12b genau eines der Schaltelemente zugeordnet ist.

In diesem Fall ist die Hilfs-Steuereinheit 14b, insbesondere zusätzlich oder alternativ zur Ansteuerung der Leistungselektronik 16b, dazu vorgesehen, in dem Fehlerbetriebszustand die Schalteinheit 18b anzusteuern und hierdurch den Elektromotor 12b derart zu betreiben, dass zumindest ein Ausrampen eines Motormoments, insbesondere eines Unterstützungsmoments, des Elektromotors 12b erreicht wird.

Ferner ist in Figur 4 zusätzlich eine Energieversorgungsschaltung 60b der Lenkvorrichtung gezeigt. In diesem Fall weisen die Haupt-Steuereinheit 10b und die Leistungselektronik 16b eine unmittelbare Verbindung mit einer Energiequelle 62b, beispielsweise in Form eines Fahrzeugbordnetzes, und die Hilfs-Steuereinheit 14b eine mittelbare Verbindung mit derselben Energiequelle 62b auf. Zur Anbindung der Hilfs-Steuereinheit 14b an die Energiequelle 62b kann die Energieversorgungsschaltung 60b beispielsweise zumindest einen Verbindungsschalter 64b, zumindest einen Spannungsregler 66b und/oder zumindest einen Kondensator 68 umfassen.

In Figur 5 ist ein weiteres Ausführungsbeispiel der Erfindung gezeigt. Dem Ausführungsbeispiel der Figur 5 ist der Buchstabe c nachgestellt. Das weitere Ausführungsbeispiel der Figur 5 unterscheidet sich von den vorherigen Ausführungsbeispielen zumindest im Wesentlichen durch eine Anbindung einer Hilfs-Steuereinheit 14c einer Lenkvorrichtung an eine Leistungselektronik 16c der Lenkvorrichtung.

In diesem Fall ist die Hilfs-Steuereinheit 14c zumindest zur Steuerung eines Betriebs eines Elektromotors 12c in einem Fehlerbetriebszustand mittelbar mit der Leistungselektronik 16c verbunden.

Dazu umfasst die Lenkvorrichtung eine weitere Kontrolleinheit 72c, welche zwischen der Hilfs-Steuereinheit 14c und der Leistungselektronik 16c angeordnet ist. Die weitere Kontrolleinheit 72c kann beispielsweise als Schalteinheit, als Pegelumsetzer, als Leitungsdämpfer, als Leitungsverstärker und/oder als separate Treiberelektronik für die Leistungselektronik 16c ausgebildet sein. Die weitere Kontrolleinheit 72c ist dazu vorgesehen, in dem Fehlerbetriebszustand in Abhängigkeit von einem weiteren Ansteuersignal 74c der Hilfs-Steuereinheit 14c den Betrieb des Elektromotors 12c der Lenkvorrichtung durch die Hilfs-Steuereinheit 14c zu ermöglichen und/oder zu optimieren, wodurch eine besonders hohe Betriebssicherheit bei einer Störung und/oder einem Ausfall einer Haupt-Steuereinheit 10c erreicht werden kann. Vorteilhaft kann die weitere Kontrolleinheit 72c dabei mit einer, insbesondere zwischen der Haupt-Steuereinheit 10c und der Leistungselektronik 16c angeordneten, Kontrolleinheit 20c als Wechselschalter zusammenwirken. Die Kontrolleinheit 20c und die weitere Kontrolleinheit 72c dienen in diesem Fall zum wechselseitigen Ansteuern der Leistungselektronik 16c durch die Hauptsteuereinheit 10c und die Hilfs-Steuereinheit 14c.

Darüber hinaus ist die Hilfs-Steuereinheit 14c in diesem Fall dazu vorgesehen, mittels einer Verbindungsleitung 76c einen Strom in der Leistungselektronik 16c zu erfassen, wodurch eine zumindest temporäre Regelung eines Motormoments des Elektromotors 12c erreicht werden kann.

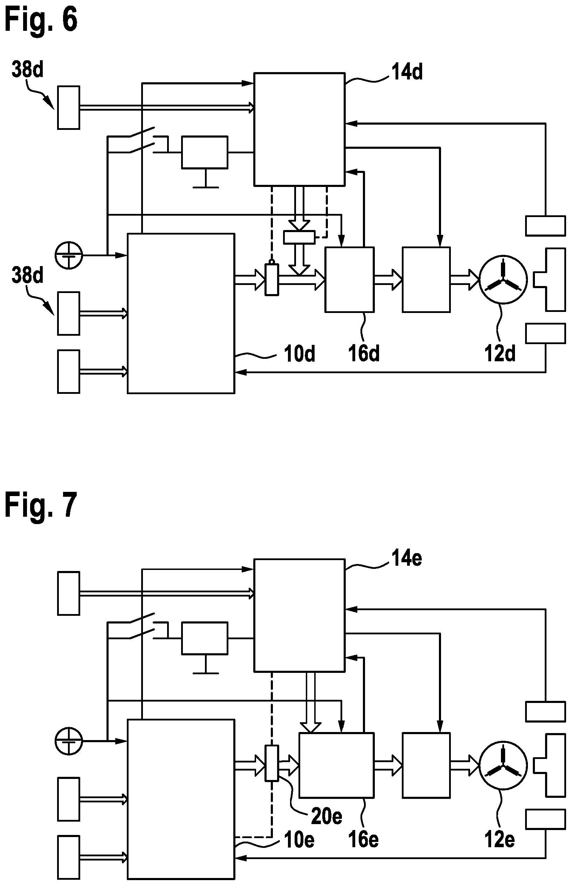

In Figur 6 ist ein weiteres Ausführungsbeispiel der Erfindung gezeigt. Dem Ausführungsbeispiel der Figur 6 ist der Buchstabe d nachgestellt. Das weitere Ausführungsbeispiel der Figur 6 unterscheidet sich von den vorherigen Ausführungsbeispielen zumindest im Wesentlichen durch eine Ausgestaltung einer Hilfs-Steuereinheit 14d einer Lenkvorrichtung.

In diesem Fall ist eine Rechenleistung der Hilfs-Steuereinheit 14d identisch oder nahezu identisch zu einer Rechenleistung einer Haupt-Steuereinheit 10d. Die Hilfs-Steuereinheit 14d ist dazu vorgesehen, die Haupt-Steuereinheit 10d in einem Fehlerbetriebszustand zu ersetzen und eine Steuerung eines Betriebs eines Elektromotors 12d zu übernehmen. Dabei ist die Hilfs-Steuereinheit 14d dazu vorgesehen, in dem Fehlerbetriebszustand eine Leistungselektronik 16d anzusteuern und hierdurch den Elektromotor 12d derart zu betreiben, dass ein zu einem Normalbetriebszustand äquivalentes Motormoment, insbesondere Unterstützungsmoment, des Elektromotors 12d erzeugbar ist. Die Hilfs-Steuereinheit 14d ist folglich dazu vorgesehen, den Elektromotor 12d in dem Fehlerbetriebszustand auf eine zu der Haupt-Steuereinheit 10d äquivalente Weise zu betreiben und zwar derart, dass ein volles Unterstützungsmoment bereitgestellt werden kann.

Hierzu weist die Hilfs-Steuereinheit 14d eine elektrischen Verbindung mit einer ersten Sensoreinheit 38d zur Erfassung einer Lenkwinkelinformation, insbesondere eines Drehmomentsignals, von einer Lenkhandhabe auf.

Figur 7 zeigt ein weiteres Ausführungsbeispiel der Erfindung. Dem Ausführungsbeispiel der Figur 7 ist der Buchstabe e nachgestellt.

In diesem Fall ist eine Hilfs-Steuereinheit 14e ebenfalls dazu vorgesehen, in einem Fehlerbetriebszustand eine Leistungselektronik 16e anzusteuern und hierdurch einen Elektromotor 12e derart zu betreiben, dass ein zu einem Normalbetriebszustand äquivalentes Motormoment, insbesondere Unterstützungsmoment, des Elektromotors 12e erzeugbar ist. Allerdings ist die Hilfs-Steuereinheit 14e dabei zu einer unmittelbaren Ansteuerung der Leistungselektronik 16e vorgesehen. Dabei ist eine Treiberelektronik (nicht dargestellt) für die Leistungselektronik 16e in die Hilfs-Steuereinheit 14e integriert. Hierdurch kann vorteilhaft auch mit einer Ein-Chip-Lösung eine Treiberelektronik für die Leistungselektronik 16e als Fehlerpfad mit abgedeckt werden.

Ferner ist in diesem Fall eine Haupt-Steuereinheit 10e zu einer Ansteuerung einer Kontrolleinheit 20e vorgesehen, wodurch eine Flexibilität der Lenkvorrichtung und/oder eine Kontrolle eines Steuersignals der Haupt-Steuereinheit 10e weiter verbessert werden kann.

## Patentansprüche

1. Lenkvorrichtung, insbesondere zur Bereitstellung einer elektrischen Lenkunterstützung, mit zumindest einer Haupt-Steuereinheit (10a-e), welche in zumindest einem Normalbetriebszustand zur Steuerung eines Betriebs wenigstens eines Elektromotors (12a-e) vorgesehen ist, und mit zumindest einer unabhängig von der Haupt-Steuereinheit (10a-e) betreibbaren Hilfs-Steuereinheit (14a-e), welche ausschließlich in einem Fehlerbetriebszustand, bei welchem eine Störung und/oder ein Ausfall der Haupt-Steuereinheit (10a-e) auftritt, zur Steuerung des Betriebs des Elektromotors (12a-e) vorgesehen ist, wobei sich die Hilfs-Steuereinheit (14a-e) in dem Normalbetriebszustand in einem passiven Betriebsmodus in Form eines Ruhebetriebsmodus und/oder eines Bereitschaftsbetriebsmodus befindet, in welchem die Hilfs-Steuereinheit (14a-e) unbetrieben und/oder inaktiv ist.

2. Lenkvorrichtung nach Anspruch 1, **dadurch gekennzeichnet, dass** die Haupt-Steuereinheit (10a-e) dazu vorgesehen ist, in dem Normalbetriebszustand ein Betriebssignal (50a) bereitzustellen und die Hilfs-Steuereinheit (14a-e) dazu vorgesehen ist, in Abhängigkeit von einem Ausbleiben des Betriebssignals (50a) die Störung und/oder den Ausfall der Haupt-Steuereinheit (10a-e) zu ermitteln.

3. Lenkvorrichtung nach Anspruch 2, **dadurch gekennzeichnet, dass** das Betriebssignal (50a) ein diskontinuierliches Signal ist und die Haupt-Steuereinheit (10a-e) dazu vorgesehen ist, das Betriebssignal (50a) in regelmäßigen zeitlichen Abständen bereitzustellen.

4. Lenkvorrichtung nach Anspruch 2 oder 3, **dadurch gekennzeichnet, dass** die Haupt-Steuereinheit (10a-e) dazu vorgesehen ist, das Betriebssignal (50a) in zeitlichen Abständen von zumindest 1 ms und/oder von höchstens 100 ms bereitzustellen.

5. Lenkvorrichtung nach einem der vorhergehenden Ansprüche, **dadurch gekennzeichnet, dass** eine Rechenleistung der Hilfs-Steuereinheit (14a-c) geringer als eine Rechenleistung der Haupt-Steuereinheit (10a-c) ist.

6. Lenkvorrichtung nach einem der vorhergehenden Ansprüche, **dadurch gekennzeichnet, dass** die Hilfs-Steuereinheit (14a-e) dazu vorgesehen ist, den Elektromotor (12a-e) in dem Fehlerbetriebszustand derart zu betreiben, dass zumindest ein Ausrampen eines Motormoments des Elektromotors (12a-e) erreicht wird.

7. Lenkvorrichtung nach einem der vorhergehenden Ansprüche, **dadurch gekennzeichnet, dass** die Hilfs-Steuereinheit (14d; 14e) dazu vorgesehen ist, den Elektromotor (12d; 12e) in dem Fehlerbetriebszustand derart zu betreiben, dass ein zu dem Normalbetriebszustand äquivalentes Motormoment des Elektromotors (12d; 12e) erzeugbar ist.

8. Lenkvorrichtung nach einem der vorhergehenden Ansprüche, **gekennzeichnet durch** wenigstens eine Leistungselektronik (16a-e) zum Betrieb des Elektromotors (12a-e), wobei die Hilfs-Steuereinheit (14a-e) dazu vorgesehen ist, in dem Fehlerbetriebszustand die Leistungselektronik (16a-e) anzusteuern.

9. Lenkvorrichtung nach einem der vorhergehenden Ansprüche, **gekennzeichnet durch** wenigstens eine Schalteinheit (18b) zur Auftrennung wenigstens einer Phase des Elektromotors (12b-e), wobei die Hilfs-Steuereinheit (14b-e) dazu vorgesehen ist, in dem Fehlerbetriebszustand die Schalteinheit (18b-e) anzusteuern.

10. Lenkvorrichtung nach einem der vorhergehenden Ansprüche, **gekennzeichnet durch** wenigstens eine Kontrolleinheit (20a; 20b; 20c; 20e), welche zumindest dazu vorgesehen ist, in dem Fehlerbetriebszustand in Abhängigkeit von einem Ansteuersignal (52a) der Hilfs-Steuereinheit (14a-e) einen Betrieb des Elektromotors (12a-e) durch die Haupt-Steuereinheit (10a-e) zu verhindern.

11. Lenksystem (22a) mit zumindest einer Lenkvorrichtung nach einem der vorhergehenden Ansprüche.

## Claims

1. Steering device, in particular for the provision of electric steering assistance, with at least one main control unit (10a-e) which is provided for controlling an operation of at least one electric motor (12a-e) in at least one normal operating state, and with at least one auxiliary control unit (14a-e) which can be operated independently of the main control unit (10a-e) and is provided for controlling the operation of the electric motor (12a-e) exclusively in a fault operating state, in the case of which a malfunction and/or a failure of the main control unit (10a-e) occurs, wherein the auxiliary control unit (14a-e) is in a passive operating mode, in the form of an idle mode and/or a standby mode in which the auxiliary control unit (14a-e) is not operated and/or is inactive, in the normal operating state.

2. Steering device according to Claim 1, **characterized in that** the main control unit (10a-e) is provided to supply an operating signal (50a) in the normal operating state, and the auxiliary control unit (14a-e) is provided to determine the malfunction and/or the failure of the main control unit (10a-e) in a manner which is dependent on an absence of the operating signal (50a).

3. Steering device according to Claim 2, **characterized in that** the operating signal (50a) is a discontinuous signal, and the main control unit (10a-e) is provided to supply the operating signal (50a) at regular time intervals.

4. Steering device according to Claim 2 or 3, **characterized in that** the main control unit (10a-e) is provided to supply the operating signal (50a) at time intervals of at least 1 ms and/or of at most 100 ms.

5. Steering device according to one of the preceding claims, **characterized in that** a computing capacity of the auxiliary control unit (14a-c) is lower than a computing capacity of the main control unit (10a-c).

6. Steering device according to one of the preceding claims, **characterized in that** the auxiliary control unit (14a-e) is provided to operate the electric motor (12a-e) in the fault operating state in such a way that at least ramping out of a motor torque of the electric motor (12a-e) is achieved.

7. Steering device according to one of the preceding claims, **characterized in that** the auxiliary control unit (14d; 14e) is provided to operate the electric motor (12d; 12e) in the fault operating state in such a way that a motor torque of the electric motor (12d; 12e) can be generated, which motor torque is equivalent to the normal operating state.

8. Steering device according to one of the preceding claims, **characterized by** at least one power electronics system (16a-e) for operating the electric motor (12a-e), the auxiliary control unit (14a-e) being provided to actuate the power electronics system (16a-e) in the fault operating state.

9. Steering device according to one of the preceding claims, **characterized by** at least one switching unit (18b) for splitting at least one phase of the electric motor (12b-e), the auxiliary control unit (14b-e) being provided to actuate the switching unit (18b-e) in the fault operating state.

10. Steering device according to one of the preceding claims, **characterized by** at least one monitoring unit (20a; 20b; 20c; 20e) which is provided at least to prevent an operation of the electric motor (12a-e) by way of the main control unit (10a-e) in the fault operating state in a manner which is dependent on an actuating signal (52a) of the auxiliary control unit (14a-e).

11. Steering system (22a) with at least one steering device according to one of the preceding claims.

## Revendications

1. Dispositif de direction, en particulier pour fournir une assistance de direction électrique, comprenant au moins une unité de commande principale (10a-e) qui est prévue dans au moins un état de fonctionnement normal pour commander un fonctionnement d'au moins un moteur électrique (12a-e), et comprenant au moins une unité de commande auxiliaire (14a-e) pouvant fonctionner indépendamment de l'unité de commande principale (10a-e) et qui est prévue, exclusivement dans un état de fonctionnement défectueux dans lequel un dérangement et/ou une panne de l'unité de commande principale (10a-e) surviennent, pour commander le fonctionnement du moteur électrique (12a-e), dans lequel l'unité de commande auxiliaire (14a-e) se trouve à l'état de fonctionnement normal dans un mode de fonctionnement passif sous la forme d'un mode de fonctionnement de repos et/ou d'un mode fonctionnement veille dans lequel l'unité de commande auxiliaire (14a-e) ne fonctionne pas et/ou est inactive.

2. Dispositif de direction selon la revendication 1, **caractérisé en ce que** l'unité de commande principale (10a-e) est prévue pour fournir un signal de fonctionnement (50a) à l'état de fonctionnement normal, et l'unité de commande auxiliaire (14a-e) est prévue pour déterminer le dérangement et/ou la panne de l'unité de commande principale (10a-e) en fonction d'une absence du signal de fonctionnement (50a).

3. Dispositif de direction selon la revendication 2, **caractérisé en ce que** le signal de fonctionnement (50a) est un signal discontinu, et l'unité de commande principale (10a-e) est prévue pour fournir le signal de fonctionnement (50a) à intervalles de temps réguliers.

4. Dispositif de direction selon la revendication 2 ou 3, **caractérisé en ce que** l'unité de commande principale (10a-e) est prévue pour fournir le signal de fonctionnement (50a) à des intervalles de temps de 1 ms au minimum et/ou de 100 ms au maximum.

5. Dispositif de direction selon l'une quelconque des revendications précédentes, **caractérisé en ce qu'**une puissance de calcul de l'unité de commande auxiliaire (14a-c) est inférieure à une puissance de calcul de l'unité de commande principale (10a-c).

6. Dispositif de direction selon l'une quelconque des revendications précédentes, **caractérisé en ce que** l'unité de commande auxiliaire (14a-e) est prévue pour faire fonctionner le moteur électrique (12a-e) à l'état de fonctionnement défectueux de façon à atteindre au moins un abaissement d'un couple moteur du moteur électrique (12a-e).

7. Dispositif de direction selon l'une quelconque des revendications précédentes, **caractérisé en ce que** l'unité de commande auxiliaire (14d ; 14e) est prévue pour faire fonctionner le moteur électrique (12d ; 12e) à l'état de fonctionnement défectueux de telle sorte qu'un couple moteur du moteur électrique (12d ; 12e), équivalent à l'état de fonctionnement normal, peut être généré.

8. Dispositif de direction selon l'une quelconque des revendications précédentes, **caractérisé par** au moins une électronique de puissance (16a-e) pour faire fonctionner le moteur électrique (12a-e), dans lequel l'unité de commande auxiliaire (14a-e) est prévue pour piloter l'électronique de puissance (16a-e) à l'état de fonctionnement défectueux.

9. Dispositif de direction selon l'une quelconque des revendications précédentes, **caractérisé par** au moins une unité de commutation (18b) pour couper au moins une phase du moteur électrique (12b-e), dans lequel l'unité de commande auxiliaire (14b-e) est prévue pour piloter l'unité de commutation (18b-e) à l'état de fonctionnement défectueux.

10. Dispositif de direction selon l'une quelconque des revendications précédentes, **caractérisé par** au moins une unité de contrôle (20a ; 20b ; 20c ; 20e) qui est prévue au moins pour empêcher à l'état de fonctionnement défectueux un fonctionnement du moteur électrique (12a-e) par l'unité de commande principale (10a-e) en fonction d'un signal de pilotage (52a) de l'unité de commande auxiliaire (14a-e).

11. Système de direction (22a) comprenant au moins un dispositif de direction selon l'une quelconque des revendications précédentes.
